# EUROPEAN PATENT APPLICATION

(11) **EP 3 184 979 A1**
(43) Date of publication of application: **28.06.2017**
(21) Application number: 15201657.2
(22) Date of filing: 21.12.2015
(51) Int. Cl.: G01K 1/08, G01K 1/14, G01K 13/02

(54) **TEMPERATURE SENSOR FOR RECORDING THE TEMPERATURE OF A FLOWING MEDIUM IN A VESSEL OR A PIPE**

(71) Applicant: ENDRESS + HAUSER WETZER GmbH + Co. KG, 87484 Nesselwang (DE)
(72) Inventor: Casirati, Paolo, 24047 Treviglio (IT); Mella, Stefano, 20026 Novate (IT); Shakil, Ahmed, 20096 Pioltello (IT); Del Bianco, Massimo, 20900 Monza (MB) (IT)
(74) Representative: Andres, Angelika Maria

(57) **Abstract**

The invention describes a temperature sensor (1) for measuring the temperature of a flowing medium in a vessel (2) or in a pipe (2), consisting at least of:
- a temperature-sensitive component in a measuring tube (3), wherein the measuring tube (3) is introduced into a protective sheath (4) which is sealed at its end section (4a) facing towards the medium and which has a fastening unit (4c) at its end section (4b) facing away from the medium, said fastening unit serving to fasten the temperature sensor (1) to a nozzle (2a) of the vessel (2) or pipe (2); and
- a flexible damping component (5, 6, 7) which is arranged between the shell surface (4d) of the protective sheath (4) and the inner surface (2b) of the nozzle (2), wherein the damping component (5, 6, 7) is designed in such a way that the damping component (5, 6, 7) dampens vibrations of the temperature sensor (1) caused by the flowing medium.

## Description

The invention concerns a temperature sensor for recording the temperature of a flowing medium in a vessel or a pipe.

Temperature sensors have many applications in the field of automation engineering, being used, for example, to record the temperature of a medium in a pipe and/or a vessel, or in field devices, such as thermal flowmeters for measuring the flow velocity and/or the density of a medium in a pipe. Such temperature sensors and field devices are manufactured and sold by the patent applicant. The underlying measuring principles of the temperature sensors and field devices are known from multiple publications.

Temperature sensors comprise a temperature-sensitive component, which is often arranged inside a protective sheath. The protective sheath performs the function of a housing that protects the temperature-sensitive component, for example, against aggressive media and/or forces caused by the flow of the medium. Another advantage of a protective sheath is that it is possible to hot-swap the temperature-sensitive component during operation.

If temperature sensors are used in pipes, they come into contact with the flowing medium and, as a result, are exposed to different mechanical forces. For one, these are shear forces which result from the contact of the flowing medium with the temperature sensor, which is often installed in the pipe orthogonally to the flow direction, and act on the temperature sensor. Furthermore, oscillating forces which are induced by vortex shedding act on the temperature sensor, resulting in vibrational movements of the temperature sensor.

In fluid dynamics, vortex shedding, also known as the "Kármán vortex street", is the term used to describe a repeating pattern of swirling vortices in alternating directions caused by the unsteady separation of flow of a medium around a body, causing said body to vibrate. The closer the frequency of the vibrations is to the natural frequency of the body around which the medium flows, the more the body vibrates. The frequency of the vibrations is determined by process parameters, such as, in particular, the physical properties of the medium, the flow velocity and the shape of the temperature sensor. With a temperature sensor as the body around which the medium flows, this can result in damage to, and even the collapse of, the temperature sensor, or - to speak in more general terms - to a reduction in the service and operating life of the temperature sensor.

This phenomenon must be given due consideration in the development of a temperature sensor and be taken into account in the sensor design. Today there are standard methods, such as ASME PTC 19.3 TW-2000, which define design rules and with the help of said rules a temperature sensor design can be checked mathematically with regard to vortex shedding. These methods only apply, however, to certain types of temperature sensor and under certain process conditions. The basic principle of the design rules is to increase the natural frequency of the temperature sensor to ward off it from the vortex shedding frequency the dangerous effects of a resonance condition. This goal is often reached by changing the geometry of the temperature sensor, for example by reducing its length and/or by increasing its diameter.

Alternatively, when functional constraints do not allow a change of the geometry of the temperature sensor, mechanical supports or absorbers are used which are fitted between the opening of the vessel and the outside of the temperature sensor. These absorbers also increase the natural frequency of the temperature sensor by reducing the free length of the temperature sensor. However it proves difficult to fit them in such a way that good coupling and therefore the desired effect can be achieved.

The goal of the present invention is therefore to present a temperature sensor which can be used for as long as possible without any defects.

The problem is solved by a temperature sensor for measuring the temperature of a flowing medium in a vessel or a pipe, comprising at least
- a temperature-sensitive component in a measuring tube, wherein the measuring tube is introduced into a protective sheath which is sealed at the end section facing towards the medium and which has a fastening unit at the end section facing away from the medium, said fastening unit serving to fasten the temperature sensor to a nozzle of the vessel or pipe; and
- a flexible damping component which is arranged between the shell surface of the protective sheath and the inner surface of the nozzle, wherein the damping component is designed in such a way that the damping component dampens vibrations of the temperature sensor caused by the flowing medium.

The advantage of the temperature sensor according to the invention is that the sensor has a longer operating life and service life. The flexible damping component ensures the contact of both the shell surface of the protective sheath and the inner surface of the nozzle as a result of which the vibrations of the temperature sensor are dampened and the free length of the sensor is advantageously reduced. This increases the natural frequency of the temperature sensor.

Thanks to the flexible design of the damping component, the temperature sensor can be easily installed and replaced. At the same time, the flexibility of the damping component enables good coupling of the protective sheath to the inner surface of the nozzle and it makes the temperature sensor less sensitive to the constructive tolerance of the nozzle where it is installed.

The temperature sensor according to the invention can be used in a wide range of applications. For example, the temperature sensor is used in a thermal flowmeter or in another application mentioned in the introduction to the description.

In a first advantageous version of the temperature sensor according to the invention, the damping component is designed as a tubular sleeve which covers at least a section of the protective sheath, wherein the damping component is tapered at a first section at least, wherein the damping component is expanded at a second section adjacent to the first section, and wherein contact is made with the inner surface of the nozzle in the area of the largest expansion.

In the unassembled state, the diameter of the damping component is, at its thickest point, less than the diameter of the nozzle and, at its thinnest point, less than the diameter of the protective sheath. This means that, when mounting, the damping component can be inserted into the nozzle in the axial direction with little effort. With the axial introduction of the protective sheath into the sleeve, the sleeve undergoes an elastic expansion, resulting in solid contact with the shell surface of the protective sheath and with the inner surface of the nozzle.

A bracket at an end section of the damping component limits the axial introduction depth into the nozzle and ensures the exact positioning of the damping component in the nozzle.

In an advantageous embodiment of the first version of the temperature sensor according to the invention, the sleeve is made from the same material as the protective sheath. This prevents any corrosion of the damping component which can occur in the event of adjacent materials that differ from one another, such as different alloys.

In a second advantageous version of the temperature sensor according to the invention, the damping component is designed as an annular element, which is arranged on the shell surface of the protective sheath and has multiple notches which are preferably arranged equidistantly to one another on the shell surface of the annular element, wherein a spring-loaded contact element is fitted in every notch. The spring-loaded contact elements gives the damping component a high degree of flexibility, which eases the assembly of the temperature sensor.

In an advantageous embodiment of the second version of the temperature sensor according to the invention, the annular element is fitted on the protective sheath mechanically or via a welding process, enabling simple and time-saving production and a firm attachment of the annular element on the shell surface of the protective sheath. In a third embodiment of the temperature sensor according to the invention, the damping component has an annular design, tapered in the radial direction and is fitted on the shell surface of the protective sheath, wherein the damping component can be deformed elastically. The damping component is preferably made from a thin metallic material.

In an advantageous embodiment of the third version of the temperature sensor according to the invention, the damping component can be moved in the axial direction along the protective sheath, wherein the axial movement is limited by an annular elevation which is provided on the shell surface of the protective sheath. The annular elevation serves to position the damping component. The length of the axial movement must be at least so big as to enable the elastic expansion of the damping component in the axial direction.

In an advantageous further development of the temperature sensor according to the invention, the fastening unit is a screwed plug, a weld-in piece or a flange. However, any other common means of fastening can also be used.

In an advantageous embodiment of the temperature sensor according to the invention, the protective sheath is made from a metallic material, particularly stainless steel or a metal alloy, a ceramic material or a thermally conductive composite material. This ensures good thermal conduction from the process medium to the temperature-sensitive component on the one hand, and the protective sheath is resistant to aggressive media on the other.

The invention is explained in more detail on the basis of the following Figures 1 to 5.
Fig. 1 shows a schematic illustration of the origination of vortex shedding at a temperature sensor;
Fig. 2 shows a first version of the temperature sensor according to the invention;
Fig. 3 shows two embodiments of the damping component of the first version of the temperature sensor according to the invention;
Fig. 4 shows a second version of the temperature sensor according to the invention; and
Fig. 5 shows a third version of the temperature sensor according to the invention.

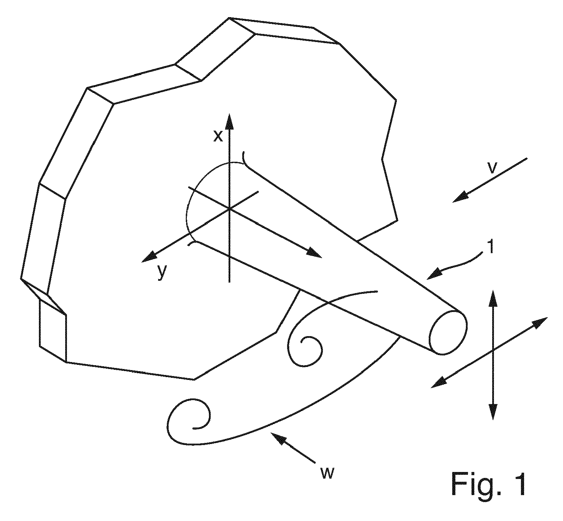

Fig. 1 shows a schematic illustration of the origination of vortex shedding w at a temperature sensor 1. If a flowing medium encounters a structure, in this case a cylindrical, conically tapered temperature sensor 1, a ridge-like pattern develops downstream of the structure in the flow direction v. Depending on the flow velocity, vortex shedding w of this ridge develops in the flow direction. Due to the vortex shedding, vibrations now act on the temperature sensor 1 in the form of two forces, a shear force in the in y direction and a lifting force in the x direction. The shear force in the y direction oscillates at a frequency fₛ, the lifting force in the x direction oscillates at twice the frequency 2fₛ.

The frequency fₛ depends on the flow velocity of the medium, medium properties such as the viscosity and density, and on the dimensions of the temperature sensor 1, such as the sensor diameter and length.

The closer the frequency fₛ is to the natural frequency of the temperature sensor and the higher the flow velocity, the greater the resulting oscillating forces. As a result of these forces, the temperature sensor 1 can be damaged or break down completely.

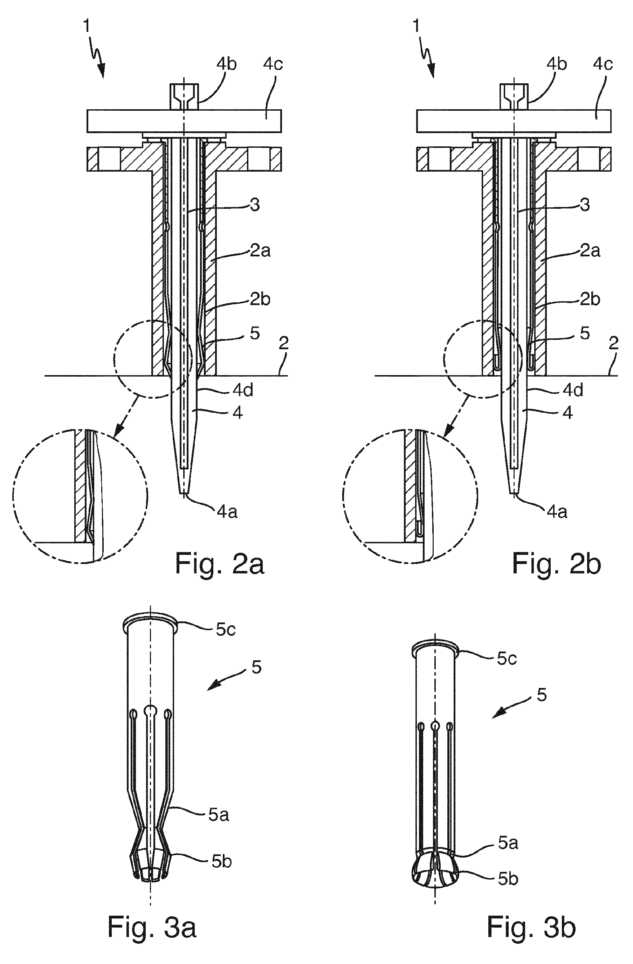

Fig. 2a and Fig. 2b each show a first version of the temperature sensor 1 according to the invention that overcomes the problems cited. The temperature sensor according to the invention comprises a protective sheath 4, which has an end section 4a, facing towards the medium, with a sealed end and an end section 4b facing away from the medium. A temperature-sensitive component, which is located in a measuring tube 3, is inserted into the protective sheath 4. The temperature-sensitive component can, for example, be a resistance temperature detector or a thermocouple.

The protective sheath 4 is made from a metallic material, particularly stainless steel or a metal alloy, a ceramic material or a composite material. This ensures good thermal conduction from the medium towards the temperature-sensitive component on the one hand, and the protective sheath 4 is chemically resistant to aggressive media on the other.

To secure the protective sheath 4 to a vessel/pipe 2 through which a medium flows, the protective sheath 4 is axially introduced into a nozzle 2a of the vessel/pipe 2 and fixed on the nozzle 2a with a fastening unit 4c which is located on the end section 4b facing away from the medium.

The fastening unit 4c can, for example, be a screwed plug, a weld-in piece or a flange. However, any other common means of fastening can also be used.

A damping component 5 is fitted between the shell surface 4d of the protective sheath 4 and the inner surface 2b of the nozzle 2a to absorb the vibrations caused by the vortex shedding w. The temperature sensor 1 illustrated in Fig. 2a and Fig. 2b shows, in each case, a damping component 5 in the form of a tubular sleeve.

Fig. 3a shows a first embodiment of this damping component 5. This component is tapered at a first section 5a and expanded at a second section 5b adjacent to the first section 5a. In the unassembled state, the diameter of the damping component 5 is, at its thickest point, less than the diameter of the nozzle 2a and, at its thinnest point, less than the diameter of the protective sheath 4.

The damping component is inserted into the nozzle 2a before the protective sheath 4 is inserted into the nozzle 2a. A bracket 5c, which is for example annular in shape, at an end section of the damping component 5 limits the insertion depth into the nozzle 2a and ensures the damping component 5 is exactly positioned in the nozzle 2a.

The protective sheath 4 itself is then introduced into the nozzle 2a. With the introduction of the protective sheath 4, the damping component 5 is expanded elastically, resulting in both a firm contact with the shell surface 4d of the protective sheath and also with the inner surface 2b of the nozzle 2a. Figure 3b shows a further embodiment of the damping component 5, which differs from the damping component 5 displayed in Figure 3a in terms of the dimensions of the first section 5a and the second section 5b.

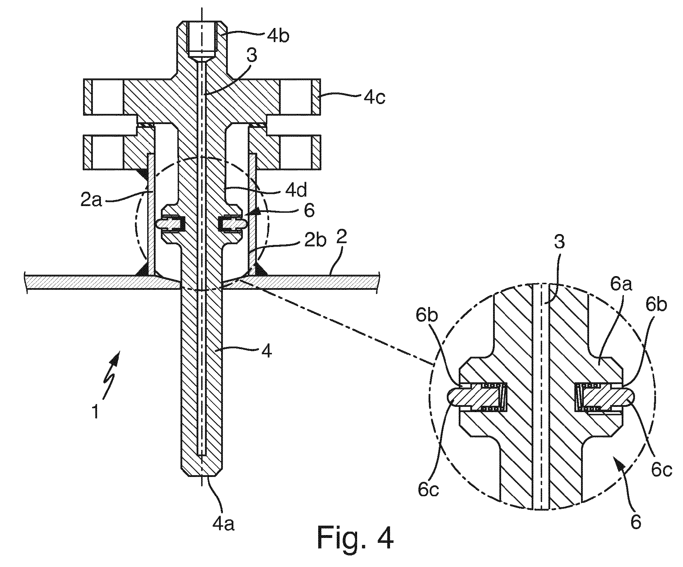

Fig. 4 shows a second version of the temperature sensor 1 according to the invention. The damping component 6 is arranged and fixed on the shell surface 4d of the protective sheath 4 in the form of an annular element 6a. The annular element 6a is fitted on the protective sheath 4 mechanically or via a welding process, enabling simple and time-saving production and a firm attachment of the annular element 6a on the shell surface 4d of the protective sheath 4.

A multiplicity of notches 6b are provided in the annular element 6a, said notches being preferably arranged equidistantly to one another on the shell surface of the annular element 6a. A spring-loaded contact element 6c is fitted in each of the notches 6b. The spring-loading presses the contact elements 6c onto the inner surface 2b of the nozzle 2a. This pressure is strong enough to guarantee firm contact with the inner surface 2b of the nozzle 2a, but also allows an axial movement of the protective sheath 4 in the nozzle 2a when mounting or for repair purposes.

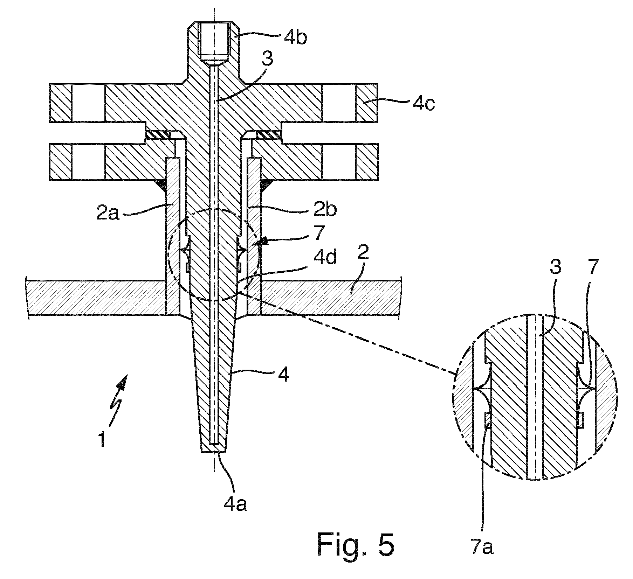

Fig. 5 shows a third version of the temperature sensor 1 according to the invention. The damping component 7 has an annular design, is fitted on the protective sheath 4, and is preferably made from a thin metallic material. Tapering of the damping component 7 in the radial direction enables an elastic deformation of the damping component 7. Despite the firm contact with the shell surface 4d of the protective sheath 4, this version of the damping component 7 also permits easy installation or removal of the protective sheath 4 for repair purposes.

When the protective sheath 4 is in the unassembled state, the damping component 7 can be moved in the axial direction along the protective sheath 4, wherein the axial movement is limited by an annular elevation 7a which is provided on the shell surface 4d of the protective sheath 4. The annular elevation 7a can be secured on the protective sheath 4 mechanically or via a welding process, is used to position the damping component 7 and prevents the damping component 7 from slipping in the direction of the end section 4a of the protective sheath 1 facing towards the medium.

The length of the axial movement must be at least so big as to enable an elastic expansion of the damping component 7 in the axial direction.

All the illustrated versions of the damping component 5, 6, 7 of the temperature sensor 1 have the same effect: for one the vibrations on the temperature sensor 1 induced by vortex shedding v are attenuated to a large extent. Secondly, the free length of the temperature sensor 1 is reduced, which is reflected in a higher natural frequency of the temperature sensor 1. This prevents damage to the temperature sensor 1 and consequently increases the sensor's operating life and service life.

The temperature sensor 1 according to the invention can be used in a wide range of applications. For example, the temperature sensor 1 can be used in a thermal flowmeter. Needless to say, a wide range of applications are feasible other than the applications mentioned.

In addition, the temperature sensor 1 according to the invention is not limited to the embodiments and examples described.

### Legend for diagrams

- 1: Temperature sensor
- 2: Vessel/pipe
- 2a: Nozzle
- 2b: Inner surface of the nozzle
- 3: Measuring tube
- 4: Protective sheath
- 4a: End section facing towards the medium
- 4b: End section facing away from the medium
- 4c: Fastening unit
- 4d: Shell surface of the protective sheath
- 5: Damping component, designed as a tubular sleeve
- 5a: First section
- 5b: Second section
- 5c: Bracket
- 6: Damping component, designed as an annular element
- 6a: Annular element
- 6b: Notches
- 6c: Spring-loaded contact element
- 7: Damping component, annular design
- 7a: Annular elevation
- v: Direction of flow
- W: Vortex shedding

## Claims

1. Temperature sensor (1) for measuring the temperature of a flowing medium in a vessel (2) or in a pipe (2), consisting at least of
- a temperature-sensitive component in a measuring tube (3), wherein the measuring tube (3) is introduced into a protective sheath (4) which is sealed at its end section (4a) facing towards the medium and which has a fastening unit (4c) at its end section (4b) facing away from the medium, said fastening unit serving to fasten the temperature sensor (1) to a nozzle (2a) of the vessel (2) or pipe (2); and
- a flexible damping component (5, 6, 7) which is arranged between the shell surface (4d) of the protective sheath (4) and the inner surface (2b) of the nozzle (2), wherein the damping component (5, 6, 7) is designed in such a way that the damping component (5, 6, 7) dampens vibrations of the temperature sensor (1) caused by the flowing medium.

2. Temperature sensor (1) as claimed in Claim 1, wherein the damping component (5) is designed as a tubular sleeve which covers at least a section of the protective sheath (4), wherein the damping component (5) is tapered at a first section (5a) at least, wherein the damping component is expanded at a second section (5b) adjacent to the first section (5a) and wherein contact is made with the inner surface of the nozzle in the area of the largest expansion.

3. Temperature sensor (1) as claimed in Claim 2, wherein the damping component (5) is made from the same material as the protective sheath (4).

4. Temperature sensor (1) as claimed in Claim 1, wherein the damping component (6) is designed as an annular element (6a), which is arranged on the shell surface of the protective sheath (4) and has multiple notches (6b) which are preferably arranged equidistantly to one another on the shell surface of the annular element 6a, wherein a spring-loaded
contact element (6c) is fitted in every notch (6b).

5. Temperature sensor (1) as claimed in Claim 4, wherein the annular element (6a) is fitted on the protective sheath (4) mechanically or via a welding process.

6. Temperature sensor (1) as claimed in Claim 1, wherein the damping component (7) has an annular design, tapered in the radial direction and is arranged on the shell surface (4d) of the protective sheath (4), wherein the damping component (7) can be deformed elastically.

7. Temperature sensor (1) as claimed in Claim 6, wherein the damping component (7) can be moved in the axial direction along the protective sheath (4) and wherein the axial movement is limited by an annular elevation (7a) which is provided on the shell surface (4d) of the protective sheath (4).

8. Temperature sensor (1) as claimed in at least one of the previous claims, wherein the fastening unit (4c) is a screwed plug, a weld-in piece or a flange.

9. Temperature sensor (1) as claimed in at least one of the previous claims, wherein the protective sheath (4) is made from a metallic material, particularly stainless steel or a metal alloy, a ceramic material or a thermally conductive composite material.
